# EUROPÄISCHE PATENTSCHRIFT

(11) **EP 1 511 049 B1**
(45) Veröffentlichungstag und Bekanntmachung des Hinweises auf die Patenterteilung: **22.11.2006**
(21) Anmeldenummer: 04003480.3
(22) Anmeldetag: 17.02.2004
(51) Int. Cl.: H01H 9/18

(54) **Verfahren zur Herstellung von Tasten, Zier- und Instrumentenblenden mit Feinsymbolik und eine nach dem Verfahren hergestellte Bedientaste**
Method of manufacturing key tops and instrument panels with fine symbols and a control button manufactured with such method
Méthode de fabrication des touches et de tableau de bord et bouton de commande fabriqué avec cette méthode

(30) Priorität: 29.08.2003 DE 10339842
(43) Veröffentlichungstag der Anmeldung: 02.03.2005
(73) Patentinhaber: Angell-Demmel Europe GmbH, 88131 Lindau (DE)
(72) Erfinder: Brünnel, Elmar, 88131 Lindau/B. (DE)
(74) Vertreter: Riebling, Peter

(56) Entgegenhaltungen:
- EP-A- 1 248 275
- EP-A- 1 321 955
- US-B1- 6 180 048

## Beschreibung

Die Erfindung betrifft ein Verfahren zur Herstellung von Tasten, Zier- und Instrumentenblenden mit Feinsymbolik nach dem Oberbegriff des Patentanspruchs 1.

In der folgenden Beschreibung wird das Verfahren anhand eines Ausführungsbeispiels beschrieben, welches die Herstellung einer Bedientaste schildert. Dies ist jedoch nicht einschränkend zu verstehen, weil nach dem Verfahren nicht nur Tasten-, sondern auch Zier- und Instrumentenblenden bearbeitet werden können. Lediglich aus Vereinfachungsgründen wird deshalb die Bearbeitung einer Bedientaste geschildert.

Im Automobilinnenraum werden heute eine Vielzahl von Geräten mit Bedientasten verbaut, die eine Kunststoffoberfläche aufweisen, welche mit einem sinnfälligen Funktionssymbol gekennzeichnet ist. Bisher werden solche Bedientasten aus reinem Kunststoff hergestellt, der mit einem laserfähigen Lack beschichtet wird. Anschließend werden die Funktionssymbole durch Lasergravur auf die Tastenoberfläche übertragen. Im Rahmen der optischen Aufwertung des Fahrzeuginnenraums wurde der Wunsch geäußert, diese Bedientasten mit einer echtmetallischen Oberfläche auszurüsten, deren Design harmonisch auf die Oberflächen der verwendeten Zierteile abgestimmt werden kann. Bisher ist es noch nicht gelungen, diese Tastenoberfläche in dieser Aufmachung darzustellen.

Nachteil des bisher bekannten Verfahrens war, dass eine sehr feine Symbolik auf der Bedientaste nicht auf metallischen Oberflächen aufgebracht werden konnte.

Die Feinheit der Strichstärke der Symbolkontur beeinflusst die Dicke des einsetzbaren Aluminiumblechs, da mit den gängigen Bearbeitungsverfahren (Stanzen, Gravieren, Ätzen) keine beliebigen Dicken-Breiten-Verhältnisse realisiert werden können. Ferner stellt die genaue Positionierung des freigestellten inneren Symbolteils mit zunehmender Feinheit der Strichstärke ein immer schwieriger zu lösendes Problem dar. Die Forderung nach optischer Harmonie mit umgebenden Bauteiloberflächen begrenzt darüber hinaus den Einsatz alternativer Metallisierungsverfahren.

Man hatte sich bisher beholfen, dass aus einer Aluminiumplatte oder einer anderen metallischen Trägerplatte die Symbole ausgestanzt wurden. Dies war jedoch mit dem Nachteil einer groben Stanzung verbunden. Wird Aluminiumblech verwendet und das Funktionssymbol freigestanzt, muss die Strichstärke der Symbolkontur im Bereich der Blechstärke liegen.

Darüber hinaus mussten Stanzgrate in Kauf genommen werden, die mühevoll entfernt werden mussten. Bezüglich der nach der Ausstanzung auf der Bedientaste stehenbleibenden Stanzrückstände war zu berücksichtigen, dass die Symbole so ausgestanzt werden mussten, dass keine von der Stanzung umschlossenen Flächen im geschlossenen Konturzug gestanzt werden konnten, weil diese Flächen andernfalls herausfielen. Man war deshalb in der Form der Stanzung beschränkt.

Zwar ist es bekannt, Symbole aus einer Aluminium-Trägerplatte durch einen Schneidstrahl (z. B. Laserstrahl oder Wasserhochdruckstrahl) herauszuschneiden. Dies war jedoch mit den gleichen Nachteilen behaftet, nämlich einer relativ groben Schneidstruktur mit der unerwünschten Beibehaltung von Schneidkanten, -graten und Haltestegen.

Wird die Symbolkontur freigelasert, entstehen Grat und Abbrand auf der Sichtseite des Dekors.

Es ist im Übrigen auch bekannt, derartige Symbole aus einer Trägerplatte durch ein chemisches Ätzen zu entfernen. Hierbei besteht der Nachteil, dass die Ätzstrichstärke immer doppelt so groß sein muss als die Materialstärke, was die Anbringung einer Feinsymbolik auf einer Bedientaste verhindert.

Als alternative Metallisierungsverfahren kommen beispielsweise Galvanik oder PVD-Beschichtung in Betracht. Allerdings ist die Anpassung des Dekors in Farbe und Haptik an umgebende Oberflächen nur sehr eingeschränkt möglich.

In jedem Fall ist nach Vereinzelung der Innenkontur des Funktionssymbols eine positionsgenaue Fixierung, zur Außenkontur in der Weiterverarbeitung (Umformung, Hinterspritzung) notwendig. Allerdings dürfen die notwendigen Fixierelemente keine Druckstellen oder andere Beschädigungen der Dekoroberfläche erzeugen und die Lage des Innenteils darf sich durch die Formfüllung beim Hinterspritzen oder durch Schwindungsprozesse in der Abkühlphase nicht relativ zur Außenkontur verschieben. Verzichtet man daher auf eine komplette Freistellung der Innenkontur, müssen Haltestege vorhanden sein, die das optische Erscheinungsbild der Innenkontur negativ beeinflussen und daher aus optischen Gründen nicht akzeptiert werden.

Mit der Druckschrift EP 1 248 275 A2 wird eine Taste oder Blende für einen Schalter, sowie ein Verfahren zur Herstellung offenbart, wobei wenigstens zwei Farbschichten auf der dem Betrachter zugewandten Seite eines Gründkörpers vorhanden sind, wobei die dem Betrachter zugewandte Farbschicht mittels einer Laserbearbeitung wenigstens abschnittsweise abgetragen ist und somit mehrfarbige Symbole einfach und genau dargestellt werden.
Diese Erfindung hat den Nachteil, dass die sinnfällige Symbolik lediglich auf Kunststoffoberflächen aufgebracht werden kann, jedoch nicht auf einer zum Beispiel den Fahrzeuginnenraum eines Pkws aufwertbaren echtmetallischen Oberfläche.

Mit der EP 1 248 275 A1 wird ein Abdeckteil für einen Leuchttaster offenbart, welcher ein Tasterunterteil und ein Tasteroberteil aus Harz aufweist, wobei ein Anzeigeelement im Tasteroberteil mit einer internen Lichtquelle beleuchtet wird, welche unterhalb des Tasteunterteils ist und dem Licht ermöglicht von Innen nach Außen der Abdeckung durch das Anzeigeelement hindurch zu leuchten. Die Abdeckung ist unter Verbindung des Oberteils mit dem Unterteil konstruiert. Das Unterteil ist aus einem thermoplastischen Elastomer, welches ein Austreten von Licht verhindert, und eine Öffnung zum Durchtritt von Licht ist im Unterteil gebildet zur Kontaktaufnahme der Grundseite des Oberteils mit der Lichtquelle. So erreicht das Licht der inneren Lichtquelle die Unterseite des Oberteils direkt, ohne Verlust. Das Anzeigeelement des Oberteils leuchtet somit mit großer Helligkeit.
Diese Erfindung hat ebenfalls den Nachteil, dass die sinnfällige Symbolik lediglich auf Kunststoffoberflächen aufgebracht werden kann, jedoch nicht auf einer zum Beispiel den Fahrzeuginnenraum eines Pkws aufwertbaren echtmetallischen Oberfläche.

Mit der Druckschrift US 5,911,317 wird eine lichtdurchlässige, metallüberzogene Kunststofftaste offenbart, welche vorzugsweise aus einem Silikon-Kunststoff mit einer gehärteten, gravierfähigen Trägerplatte hergestellt ist, welche eine graviertes Funktionssymbol aufweist, dass vollständig freigelegt ist. Dieser Druckschrift ist nicht zu entnehmen, dass die Trägerplatte rückseitig graviert ist und diese erst nach vorderseitiger Materialabtragung mindestens teilweise freigelegt ist, da eine vorderseitige Bearbeitung der Trägerplatte eine wesentlich Begrenzung in der Materialdicke ausbildet.

Der Erfindung liegt deshalb die Aufgabe zugrunde, ein Verfahren zur Herstellung von Tasten, Zier- und Instrumentenblenden so weiterzubilden, dass auf der Bedientaste eine feine Symbolik mittels rückseitiger Bearbeitung angebracht werden kann, die ggf. auch hinterleuchtet wird und bei der nicht die Gefahr besteht, dass stehenbleibende Materialteile der Platte, die von ausgeschnittenen Symbolen umschlossen sind, unbeabsichtigt aus der Platte herausfallen.

Zur Lösung der gestellten Aufgabe ist das Verfahren durch die technische Lehre des Anspruches 1 gekennzeichnet.

Ein nach dem Verfahren hergestellter Gegenstand weist eine hinterleuchtfähige Tasten, Zier- und Instrumentenblende auf einem Kunststoffträger mit echtmetallischer Oberfläche auf, in welcher ein beliebiges Funktionssymbol mit freigestelltem Innenteil ausgebildet ist. Die hinterleuchtfähige Kontur des Funktionssymbols ist in feiner Strichstärke dargestellt.

Die Erfindung zur Herstellung der feinen Funktionssymbolik besteht in der kombinierten Anwendung von Lasergravur, Ätztechnik sowie Druck- und Laminierverfahren.

Im wesentlichen werden folgende Verfahrensschritte durchgeführt:
1. Eine gravier- und ätzfähige Metallplatte wird an der Rückseite mittels Gravur (mech. Gravur, Erodieren, Laserstrahl) mit einer feinen Symbolik versehen, wobei die Gravur lediglich in das Material der Trägerplatte hineinragt, jedoch nicht hindurchtritt.
   Die Gravur in der Trägerplatte soll möglichst tief sein, jedoch nicht an der Vorderseite (z. B. dem Laserstrahl gegenüberliegend) aus der Platte heraustreten.
2. Die so hergestellte und gravierte Trägerplatte wird rückseitig laminiert.
   Als bevorzugtes Ausführungsbeispiel für den Laminiervorgang wird das Auftragen einer Laminierfarbe angegeben. Es kommen jedoch noch andere Beschichtungsmöglichkeiten zum Zuge, wie z. B. das Anbringen einer bunten Folie, z. B. über ein Kaschierverfahren ohne Haftvermittler
   oder das Bedrucken der Rückseite mit einer Druckfarbe, die ggf. auch mehrfarbig sein kann.
   Aufgabe dieser Schicht ist, dass sie als Haftvermittler für eine später, im dritten Verfahrensschritt aufzubringende Folie dient.
   Wird ohne Haftvermittler (z. B. auf offenporige Trägerbleche) laminiert, kann alternativ die Laminierfolie bedruckt werden. Die Beschichtung der Trägerplatte entfällt dann.
3. Demzufolge wird eine Folie auf die Laminierschicht bzw. die Trägerplatte aufgebracht und auf dieser festgelegt.
4. In einem Material abtragenden Vorgang wird die Vorderseite der gravur- und ätzfähigen Trägerplatte mit einem Abtragungsmedium behandelt. Ein derartiges Abtragungsmedium ist z. B. ein Ätzmittel oder ein elektroerosiver bzw. ein elektrochemischer Abtragungsvorgang (z. B. über eine Elektrolyse) oder dergleichen. Wird hingegen schleiftechnisch abgetragen, bekommt die Vorderseite gleichzeitig eine gerichtete Dekorierung.
5. Der Materialabtrag an der Vorderseite der Trägerplatte erfolgt so lange, bis die in die Trägerplatte hineinreichende Gravur an der Vorderseite mindestens teilweise oder vollständig freigelegt ist.
6. Nach diesem Materialabtrag erfolgt in einem sechsten Verfahrensschritt das Aufbringen einer Schutzschicht auf die Vorderseite der so abgetragenen Trägerplatte. Die Schutzschicht kann hierbei aus Schutzlack, Eloxal, PVD, CVD oder dgl. sein.
   Hierbei kann die Schutzschicht z. B. durch ein Beschichten (Sputtering) im Vakuum aufgebracht werden oder es können Lackschichten oder andere geeignete, dünne Schichten gedruckt, gespritzt oder in anderer Weise aufgebracht werden, die geeignet sind, die Vorderseite (Sichtseite) zu versiegeln und/oder zu dekorieren.

Ein nach dem Verfahren hergestellter Gegenstand, z. B. eine Bedientaste mit Feinsymbolik zeichnet sich dadurch aus, dass die Feinsymbolik nun mit feiner Strich- und Gravierstärke auf der Vorderseite der Trägerplatte sichtbar ist und solche Strickstärken bevorzugt im Bereich minimal bis 0,1 mm stark sind. Darunter liegende Strichstärken sind zwar mit dem erfindungsgemäßen Verfahren möglich, sind aber nicht mehr so gut sichtbar, so dass eine Gravurstrichstärke von etwa 0,1mm bevorzugt wird. Darüber liegende Strichstärken werden nur durch die Dimension der Taste begrenzt.

Vorteil dieses Verfahrens ist, dass die Trägerplatte nun von der Rückseite sehr gut hinterleuchtet werden kann und die mit feiner Gravur eingebrachten Funktionssymbole mit großer Randschärfe beleuchtet aus der Fläche heraustreten.

Es kommt daher nicht mehr zu einem Materialabtrag im Bereich der Kanten des Gravurzuges, wie sie vorher beim von der Sichtseite vorgenommenen Stanzen oder Ätzen in Kauf genommen werden mussten, sondern die Gravurzüge sind scharfkantig und deshalb abbildungsscharf.

Wichtig ist außerdem, dass die durch die Gravur freigestellten Bereiche nun nicht mehr über Stege oder sonstige Verbindungsmittel mit der übrigen Fläche der Trägerplatte in Verbindung stehen müssen, weil die freigestellten Bereiche bereits positionsgenau in der Trägerplatte positioniert und fest mit der Trägerplatte verbunden sind, sodass nicht mehr die Gefahr besteht, dass diese herausfallen.

Beim Stand der Technik musste bei entsprechenden Stanzwerkzeugen immer darauf geachtet werden, dass freigestellte Bereiche über Stege mit dem übrigen Bereich der Trägerplatte in Verbindung bleiben, um ein Herausfallen dieser Bereiche zu vermeiden. Dies ist bei der Erfindung nicht mehr notwendig, weil die freigestellten Bereiche durch die Haftung an der rückseitigen Laminierfarbe oder -folie in der Trägerplatte verankert bleiben.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination neu gegenüber dem Stand der Technik sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: Draufsicht auf die Sichtseite einer Bedientaste;
Figur 2: Draufsicht auf die Rückseite einer Aluminium-Platte mit Lasergravur;
Figur 3: Schnitt gemäß der Linie III-III in Figur 2;
Figur 4: Schnitt durch die Platte nach dem zweiten Verfahrensschritt;
Figur 5: Schnitt durch die Platte nach dem dritten Verfahrensschritt;
Figur 6: Schnitt durch die Platte nach dem vierten Verfahrensschritt;
Figur 7: Schnitt durch die fertig gestellte Bedientaste nach A-A in Figur 1.

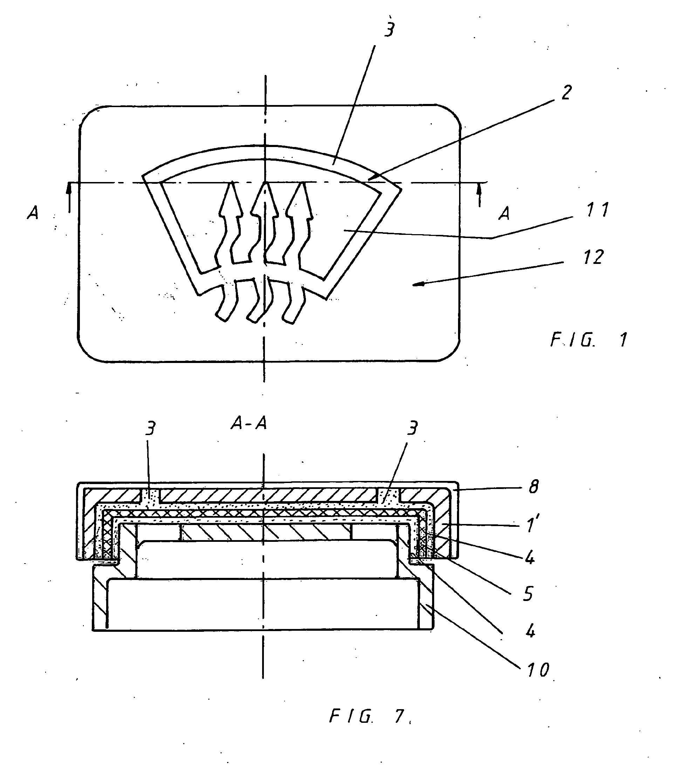

Die Figur 1 zeigt die Draufsicht auf die Sichtseite einer Bedientaste 12 mit einer feinen, hinterleuchtbaren Funktionssymbolik 2, die als Gravurzug 3 hergestellt ist.

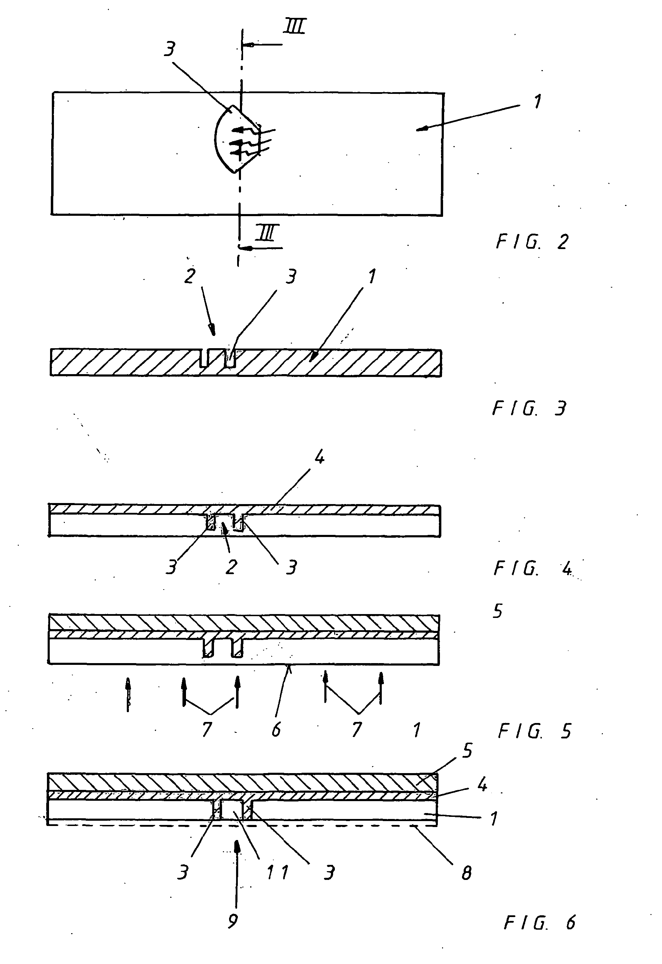

Zur Herstellung dieser Bedientaste 12 wird zunächst eine beliebig dicke Trägerplatte 1 - im vorliegenden Fall ein Aluminiumblech mit einer bevorzugten Blechstärke zwischen 0,2 und 0,5 mm - rückseitig lasergraviert. Nach Figur 2 wird der Gravurzug 3 für das Funktionssymbol 2 in sehr feiner Strichstärke auf die Trägerplatte 1 übertragen (z. B. 0,15 mm Strichbreite bei 0,5 mm dickem Blech).
Dabei wird jedoch das Blech nicht vollständig durchgelasert, sondern lediglich mit einer tiefen Gravur versehen, deren Tiefe bis ca. 0,01 mm Restwandstärke der Trägerplatte 1 reicht. Dies zeigt Figur 3.

Wichtig ist, dass die Rückseite der Trägerplatte 1 graviert wird, da so alle fertigungsbedingten Oberflächenfehler (Gratbildung, Abbrand) im nichtsichtbaren Bereich der späteren Taste liegen.

Anschließend wird das Aluminiumblech angebeizt (Entfettung, Vorbehandlung zur Bedruckung) und nach Figur 4 mit einer Laminierfarbe 4 beschichtet. Hierbei wird mindestens teilweise der durch Lasergravur enstandene Gravurzug 3 ausgefüllt.

Die Laminierfarbe (transparent oder beliebig pigmentiert) dient als Haftvermittler zu einer Kunststofffolie 5, die wiederum transparent oder farbig sein kann. Durch Laminierung der Kunststofffolie auf die Rückseite des Aluminiumblechs entsteht schließlich ein Werkstoffverbund, der ätztechnisch behandelt werden kann. Die Laminierfarbe 4 kann bei offenporigen Trägerblechen auch entfallen.

Dieser Aluminium-Kunststoff-Verbund wird nun nach Figur 5 so lange in ein Beizbad getaucht, bis die Restwandstärke des Aluminiums durch den Beizangriff des Ätzmittels 7 abgetragen und die Symbolgravur nach Figur 6 freigelegt worden ist. Auf der Sichtseite wird dann eine die freigelegte Gravur überdeckende Schutzschicht 8 aufgebracht. Die Dicke der Trägerplatte 1 wurde so verringert und hieraus die Rest-Trägerplatte 1' gebildet.

Auf diese Art entsteht ein ebener Aluminium-Kunststoffverbund, der hinterleuchtfähige Funktionssymbole 2 mit feiner Strichkontur und positionsgenau platzierten Freistellungen 11 aufweist. Nachdem die freigestellten Bereiche 11 noch rückseitig an der Laminierschicht haften, können sie nicht herausfallen. Es sind auch keine Verbindungsstege zum umliegenden Material mehr notwendig.

Dieser Verbund kann vorderseitig beliebig durch Anbringung durchsichtiger, halbdurchsichtiger, gefärbter und/oder gedruckter Schichten dekoriert werden.

Rückseitig können zusätzliche Funktionsschichten (z. B. Haftvermittler) aufgebracht werden, um den Tastenkörper in Form des Kunststoffträgers 10 nach Figur 7 direkt anzuspritzen. In der Regel wird hierzu die Taste stanztechnisch vereinzelt und durch Umformung eine konturgenaue Schale hergestellt, die in die Spritzgussform eingelegt wird.

Das Verfahren ist auch anwendbar auf die Herstellung von Schalt- und Wählhebelspangen, sowie für Tasten, Zier- und Instrumentenblenden mit freigestellten Symbolen.

### Zeichnungslegende

- 1: Trägerplatte (ätzfähig)
- 2: Funktionssymbol
- 3: Gravurzug
- 4: Laminierschicht
- 5: Folie
- 6: Vorderseite
- 7: Ätzmittel
- 8: Schutzschicht
- 9: Sichtseite
- 10: Kunststoffträger
- 11: freigestellter Bereich

- 1': Restträgerplatte

## Patentansprüche

1. Verfahren zur Herstellung von Tasten, Zier- und Instrumentenblenden mit Feinsymbolik, **gekennzeichnet, durch folgende Verfahrensschritte:**
1. Eine gravier- und ätzfähige Trägerplatte (1,1') wird an der Rückseite mit einem Gravierverfahren mit einer feinen Symbolik versehen, wobei die Gravur lediglich in das Material der Trägerplatte (1, 1') hineinragt, jedoch nicht hindurchtritt,
2. die Trägerplatte (1, 1') wird rückseitig mit einer Schicht (4) beschichtet,
3. es wird eine Folie (5) auf die Schicht (4) oder direkt auf die Trägerplatte (1, 1') aufgebracht und auf dieser festgelegt,
4. in einem Material abtragenden Vorgang wird die Vorderseite der Trägerplatte (1, 1') mit einem Abtragungsmedium (7) behandelt,
5. die Materialabtragung mit dem Abtragungsmedium (7) erfolgt so lange, bis die in die Trägerplatte (1') hineinreichende Gravur (3) an der Vorderseite mindestens teilweise oder vollständig freigelegt ist,
6. Aufbringen einer Schutzschicht (8) auf die Vorderseite der abgetragenen Trägerplatte (1').

2. Verfahren nach Anspruch 1, **dadurch gekennzeichnet, dass** in einem siebten Verfahrensschritt ein Kunststoffträger an die Rückseite der Trägerplatte (1') angespritzt wird.

3. Verfahren nach Anspruch 1 oder 2, **dadurch gekennzeichnet, dass** die im zweiten Verfahrensschritt genannte Schicht eine Laminierschicht (4) ist.

4. Verfahren nach Anspruch 1 oder 2, **dadurch gekennzeichnet, dass** die im zweiten Verfahrensschritt genannte Schicht eine Laminierfarbe (4) ist.

5. Verfahren nach Anspruch 1 oder 2, **dadurch gekennzeichnet, dass** die im zweiten Verfahrensschritt genannte Schicht eine Kaschierschicht ist.

6. Verfahren nach Anspruch 1 oder 2, **dadurch gekennzeichnet, dass** die im zweiten Verfahrensschritt genannte Schicht eine durch Bedrucken aufgebrachte Schicht ist.

7. Verfahren nach einem der Ansprüche 1 bis 6, **dadurch gekennzeichnet, dass** die im zweiten Verfahrensschritt genannte Schicht einfarbig ist.

8. Verfahren nach einem der Ansprüche 1 bis 6, **dadurch gekennzeichnet, dass** die im zweiten Verfahrensschritt genannte Schicht mehrfarbig ist.

9. Verfahren nach einem der Ansprüche 1 bis 8, **dadurch gekennzeichnet, dass** die im vierten Verfahrensschritt genannte Materialabtragung ein Ätzverfahren ist.

10. Verfahren nach einem der Ansprüche 1 bis 8, **dadurch gekennzeichnet, dass** die im vierten Verfahrensschritt genannte Materialabtragung ein elektrolytisches Verfahren oder ein elektro-erosives oder ein Schleifverfahren ist.

## Claims

1. Process for the manufacture of key-buttons and trim and instrument panels with fine symbols or emblems, **characterised by** the following process steps:
1. An engravable and etchable carrier plate (1, 1') is provided on the back with a fine symbol or emblem by an engraving process, with the engraving extending only into but not all the way through the material of the carrier plate (1,1'),
2. the carrier plate (1, 1') is coated on the back with a layer (4),
3. a foil (5) is applied over the layer (4) or directly over the carrier plate (1, 1'), and fixed thereon,
4. in a material removal operation, the front side of the carrier plate (1, 1') is treated with a stripping medium (7),
5. removal of material with the stripping medium (7) continues until the engraving (3) reaching into the carrier plate (1') is at least partly or completely exposed on the front side,
6. application of a protective coating (8) over the front side of the stripped carrier plate (1').

2. Process according to claim 1, **characterised in that** in a seventh process step, a plastic carrier is injected on to the back of the carrier plate (1').

3. Process according to claim 1 or claim 2, **characterised in that** the layer alluded to in the second process step is a laminated layer (4).

4. Process according to claim 1 or claim 2, **characterised in that** the layer alluded to in the second process step is a laminated colour (4).

5. Process according to claim 1 or claim 2, **characterised in that** the layer alluded to in the second process step is a backing layer.

6. Process according to claim 1 or claim 2, **characterised in that** the layer alluded to in the second process step is applied by printing.

7. Process according to claims 1 to 6, **characterised in that** the layer alluded to in the second process step is of a uniform colour.

8. Process according to claims 1 to 6, **characterised in that** the layer alluded to in the second process step is multicoloured.

9. Process according to any one of claims 1 to 8, **characterised in that** the material removal alluded to in the fourth process step is an etching process.

10. Process according to any one of claims 1 to 8, **characterised in that** the material removal alluded to in the fourth process step is an electrolytic process or an electro-erosive or grinding process.

## Revendications

1. Procédé pour fabriquer des touches, des caches décoratifs et des caches d'instruments portant des symboles fins, **caractérisé par les étapes suivantes :**
1) une plaque de support (1, 1') apte à être gravée et à être attaquée chimiquement est pourvue sur sa face arrière d'un symbole fin à l'aide d'un procédé de gravure, étant précisé que la gravure ne fait que pénétrer dans la matière de la plaque (1, 1'), mais ne la traverse pas,
2) la plaque de support (1, 1') est recouverte sur sa face arrière d'une couche (4),
3) un film (5) est posé sur la couche (4) ou directement sur la plaque (1, 1') et est fixé sur celle-ci,
4) lors d'une opération d'enlèvement de matière, la face avant de la plaque de support (1, 1') est traitée à l'aide d'un agent de corrosion (7),
5) l'enlèvement de matière à l'aide de l'agent de corrosion (7) a lieu jusqu'à ce que la gravure (3) qui pénètre dans la plaque de support (1') soit au moins partiellement ou complètement dégagée sur la face avant,
6) application d'une couche de protection (8) sur la face avant de la plaque de support corrodée (1').

2. Procédé selon la revendication 1, **caractérisé en ce que** lors d'une septième étape, un substrat en matière plastique est rapporté par injection sur la face arrière de la plaque de support (1').

3. Procédé selon la revendication 1 ou 2, **caractérisé en ce que** la couche mentionnée dans la deuxième étape est une couche laminée (4).

4. Procédé selon la revendication 1 ou 2, **caractérisé en ce que** la couche mentionnée dans la deuxième étape est une peinture laminée (4).

5. Procédé selon la revendication 1 ou 2, **caractérisé en ce que** la couche mentionnée dans la deuxième étape est une couche contrecollée.

6. Procédé selon la revendication 1 ou 2, **caractérisé en ce que** la couche mentionnée dans la deuxième étape est une couche appliquée par impression.

7. Procédé selon l'une des revendications 1 à 6, **caractérisé en ce que** la couche mentionnée dans la deuxième étape est monochrome.

8. Procédé selon l'une des revendications 1 à 6, **caractérisé en ce que** la couche mentionnée dans la deuxième étape est polychrome.

9. Procédé selon l'une des revendications 1 à 8, **caractérisé en ce que** l'enlèvement de matière mentionné dans la quatrième étape est constitué par un procédé d'attaque chimique.

10. Procédé selon l'une des revendications 1 à 8, **caractérisé en ce que** la couche mentionnée dans la quatrième étape est un procédé électrolytique, un procédé d'électroérosion ou un procédé de polissage.
